# EUROPEAN PATENT SPECIFICATION

(11) **EP 4 117 389 B1**
(45) Date of publication and mention of the grant of the patent: **21.10.2026**
(21) Application number: 22182938.5
(22) Date of filing: 05.07.2022
(51) Int. Cl.: H04W 84/00, H04W 84/18

(54) **COMMUNICATIONS SYSTEM RECONFIGURABLE TO DIFFERENT TOPOLOGIES AND ASSOCIATED METHODS**
AUF VERSCHIEDENE TOPOLOGIEN REKONFIGURIERBARES KOMMUNIKATIONSSYSTEM UND ZUGEHÖRIGE VERFAHREN
SYSTÈME DE COMMUNICATION RECONFIGURABLE À DIFFÉRENTES TOPOLOGIES ET PROCÉDÉS ASSOCIÉS

(30) Priority: 07.07.2021 US 202117305392
(43) Date of publication of application: 11.01.2023
(73) Proprietor: L3Harris Technologies, Inc., Melbourne, FL 32919 (US)
(72) Inventor: KENNEY, Brent A., Bountiful, UT 84010 (US); THORP, Brian J., sandy, UT 84094 (US); REIMANN, Matthew J., Draper, UT 84020 (US); BENCH, Jeffrey B., Lehi, UT 84043 (US)
(74) Representative: Schmidt, Steffen J.

(56) References cited:
- WO-A1-2013/158591
- US-A1- 2014 036 702
- WU FAN ET AL: "Batch-Assisted Verification Scheme for Reducing Message Verification Delay of the Vehicular Ad Hoc Networks", IEEE INTERNET OF THINGS JOURNAL, IEEE, USA, vol. 7, no. 9, 25 June 2020 (2020-06-25), pages 8144 - 8156, XP011809281, DOI: 10.1109/JIOT.2020.3004811
- TANG SUHUA: "Distributed Multiuser Scheduling for Improving Throughput of Wireless LAN", IEEE TRANSACTIONS ON WIRELESS COMMUNICATIONS, IEEE SERVICE CENTER, PISCATAWAY, NJ, US, vol. 13, no. 5, 1 May 2014 (2014-05-01), pages 2770 - 2781, XP011548087, ISSN: 1536-1276, [retrieved on 20140512], DOI: 10.1109/TWC.2013.040214.130707
- BARCELOS VLADIMIR P ET AL: "Vehicle monitoring system using IEEE 802.11p device and Android application", 2014 IEEE SYMPOSIUM ON COMPUTERS AND COMMUNICATIONS (ISCC), IEEE, 23 June 2014 (2014-06-23), pages 1 - 7, XP032649921, DOI: 10.1109/ISCC.2014.6912495

## Description

### Field of the Invention

The present invention relates to communications systems, and, more particularly, to a communications system having mobile communications nodes that are reconfigurable to different topologies and related methods.

### Background

Wireless networks have experienced increased development in the past decades. One of the most rapidly developing areas is mesh networks, such as a mobile ad hoc network. Physically, mesh networks include a number of geographically-distributed, mobile communications nodes that are wirelessly connected by one or more radio frequency channels. Compared with other types of networks, such as cellular networks or satellite networks, the more distinctive feature of these communication systems is the lack of any fixed infrastructure. The mesh network may be created on-the-fly as the mobile communications nodes transmit to or receive from other nodes, and different nodes join or disconnect, thus reconfiguring the topology of the network. Mobility can vary from zero distance units per time unit to whatever the upper bound may be placed on the nodes. These networks do not generally depend on a particular node to function as a master or controller node, and the network dynamically adjusts as some nodes join and other nodes leave the network, thus forming a new topology when one node leaves or another node joins.

In an environment where a fixed communication infrastructure is unreliable or unavailable, for example, in a natural disaster area struck by an earthquake or hurricane, these networks may be quickly deployed and provide much needed communications. While accommodating the requirements of a hostile environment or emergency situation may be a driving force behind the development of these networks, these types of communications systems are finding new applications in civilian and commercial areas, allowing people to exchange data in the field or even in a confined setting, such as a classroom, without using any network infrastructure except the mesh network they create by turning on their computers or mobile communications devices.

Selecting the neighboring mobile communications nodes in a decentralized mobile ad hoc network is a complicated task. When the network operates with frequency agility, the complexity factor increases since the network may operate with different communications channels at different frequencies. For example, the communications system may operate using a frequency division duplexing (FDD) protocol, allowing uplink and downlink transmissions at the same time, but over different frequency bands. The network thus has frequency agility, but it also has an increased complexity, making the selection of neighboring nodes more complicated. The search space for potential mobile communications nodes in a given topology will grow significantly when the different frequencies are taken into account, especially in a dense network where there are numerous potential neighboring nodes. In a complicated network having the potential of many neighboring nodes, it is desirable if the search space can be limited and the network reconfigured to a new topology, but still find an optimum new topology in the process.

Some current communication systems operating as mesh networks employ different metrics having associated weights to evaluate a current topology to determine if the topology should be changed. The metrics can be added or removed and their different weights may be adjusted. One current communications system operating as a mesh network applies different combinations of metrics such that valid topologies include all nodes that have a higher potential rate than the worst node in a set. This limits the number of valid topologies and helps with reciprocity, but that system may not find an optimum new topology in an acceptable period of time, or may require excessive bandwidth and data processing at different nodes within the network, thus becoming inefficient and slow in data transfer and communication among the different nodes.
An example for a communication system operating as mesh network is disclosed by the document US 2014 / 036 702 A1.
Further examples for communication systems are disclosed by WU FAN ET AL: "Batch-Assisted Verification Scheme for Reducing Message Verification Delay of the Vehicular Ad Hoc Networks", IEEE INTERNET OF THINGS JOURNAL, USA, vol. 7, no. 9, 25 June 2020, pages 8144-8156, and TANG SUHUA: "Distributed Multiuser Scheduling for Improving Throughput of Wireless LAN", IEEE TRANSACTIONS ON WIRELESS COMMUNICATIONS, IEEE SERVICE CENTER, PISCATAWAY, USA, vol. 13, no. 5, 1 May 2014, pages 2770-2781.

### Summary

The invention is defined by independent claims 1 and 4. Further embodiments of the invention are defined by the dependent claims.

In general, a communications system may comprise a plurality of mobile communications nodes operating according to a current topology and reconfigurable to a new topology. Each mobile communications node may comprise a wireless transceiver, and a controller coupled to the wireless transceiver and configured to transmit spectral performance data to a plurality of adjacent nodes, receive spectral performance data from the plurality of adjacent nodes, identify a plurality of potential topologies for the plurality of adjacent nodes based on the spectral performance data, select a subset of potential topologies from among the plurality of potential topologies, generate a respective performance score for each potential topology of the subset of potential topologies, and switch to a new topology from among the subset of potential topologies based upon the performance scores.

The controller may be configured to switch to the new topology further based upon whether the performance score of the new topology exceeds the performance score of the current topology by a hysteresis value. In an example, the spectral performance data may comprise energy per bit to noise power spectral density ratio (E_{b}/N₀. The controller may be configured to select the subset of potential topologies comprising a plurality of random topologies. The controller may be configured to select the subset of potential topologies comprising likely topologies. The controller may also be configured to select respective operating frequencies for the potential topologies.

In an example, the wireless transceiver may comprise a code division multiple access (CDMA) transceiver. The controller may be configured to generate the respective performance scores based on at least one performance metric, which may comprise at least one of fragmented nodes, number of connected nodes, and data rate.

Another aspect is directed to a method for operating a mobile communications node within a communications system that may comprise a plurality of mobile communications nodes operating according to a current topology and reconfigurable to a new topology. The method may comprise operating a controller of the mobile communications node to transmit spectral performance data to a plurality of adjacent nodes, receive spectral performance data from the plurality of adjacent nodes, identify a plurality of potential topologies for the plurality of adjacent nodes based on the spectral performance data, select a subset of potential topologies from among the plurality of potential topologies, generate a respective performance score for each potential topology of the subset of potential topologies, and switch to a new topology from among the subset of potential topologies based upon the performance scores.

### Brief Description of the Drawings

Other objects, features and advantages of the disclosed subject-matter become apparent from the detailed description which follows, when considered in light of the accompanying drawings in which:
FIG. 1 is a high-level, simplified diagram of a communications system showing a plurality of mobile communications nodes that may be reconfigurable to a new topology in accordance with a non-limiting example.
FIG. 2 is a block diagram showing greater details of the communications system of FIG. 1.
FIG. 3A is a graph showing an example of the magnitude versus frequency for the received spectral performance data transmitted from node B to node A in the communications network of FIGS. 1 and 2.
FIG. 3B is a graph showing the predicted energy per bit to noise power spectral density ratio (E_{b}/N₀ versus frequency for node B based on the received spectral performance data shown in FIG. 3A.
FIG. 3C is a graph similar to FIG. 3A but showing the example results for node C to node A.
FIG. 3D is a graph similar to FIG. 3B but showing the predicted E_{b}/N₀ versus frequency for node C.
FIG. 3E is a graph similar to FIG. 3A but showing the example results for node D.
FIG. 3F is a graph similar to FIG. 3B showing the E_{b}/N₀ versus frequency for node D.
FIG. 4 is a graph showing potential topologies identified for the communications system of FIGS. 1 and 2 using the predicted E_{b}/N₀ versus frequency shown in the graphs of FIGS. 3B, 3D and 3F.
FIG. 5 is a high-level flowchart showing an example of operating a mobile communications node with the communications system of FIGS. 1 and 2.

### Detailed Description

The present description is made with reference to the accompanying drawings, in which exemplary examples are shown.

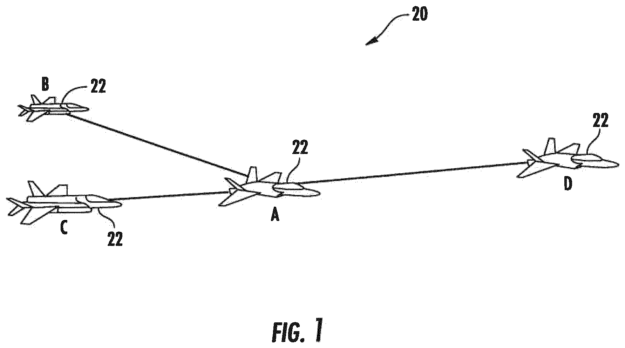

Referring initially to FIG. 1, a communications system is illustrated generally at **20** showing a plurality of mobile communications nodes **22** operating according to a current topology and reconfigurable to a new topology. In this simplified example, four mobile communications nodes **22** are illustrated and labeled A, B, C and D. Each mobile communications node **22** is illustrated as an aircraft, but each mobile communications node could instead be an automobile, a train, a ship, passengers with mobile phones, or a combination of such nodes. In this example, some mobile communications nodes **22** may be physically closer to each other than other mobile communications nodes, but the respective distances that are illustrated in FIG. 1 may be the signal-to-noise ratio (SNR) distance. Although the communications system **20** is shown with each mobile communications node **22** being in a direct line-of-sight with each other, such as air-to-air communications as illustrated, or direct air-to-sea or air-to-ground communications, the line-of-sight direct communications is not a requirement and some of the mobile communications nodes may not be in a direct line-of-sight communication with other mobile communications nodes.

In an example, each mobile communications node **22** may communicate using a frequency division duplexing (FDD) protocol, allowing uplink and downlink transmissions at the same time, but over different frequency bands, allowing frequency agility in an example 400 MHz band with multiple different channels using a spread spectrum, code division multiple access (CDMA) communications protocol. The bandwidth in which each mobile communications node **22** may operate may be as wide as 400 MHz, but separate radio frequency (RF) channels may be about 40 MHz per channel.

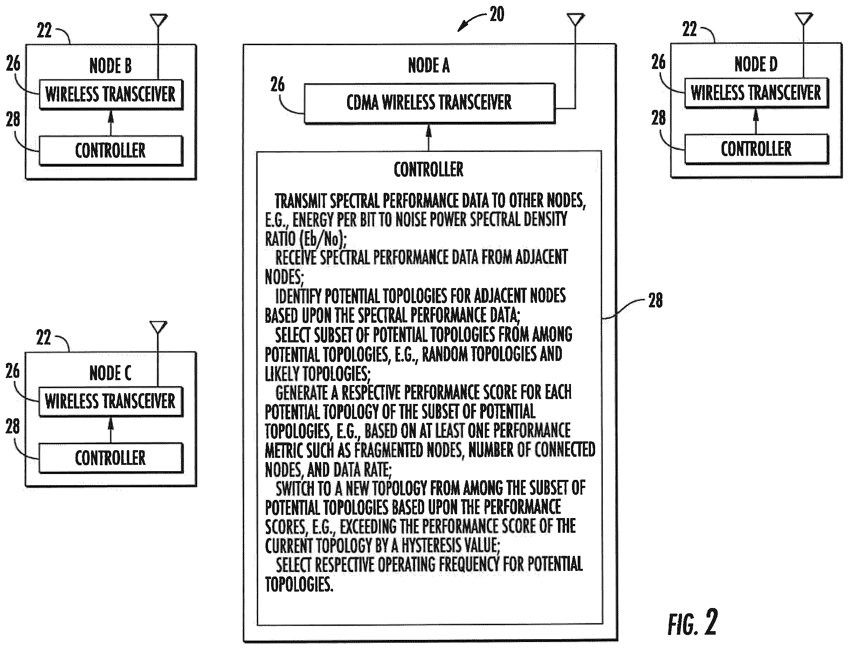

Referring now to the more detailed block diagram of FIG. 2, greater details are illustrated of the communications system **20** that includes the plurality of mobile communications nodes **22** operating in a current topology and shown as nodes A, B, C and D and reconfigurable to a new topology. Each mobile wireless communications node **22** includes a wireless transceiver **26,** which may be formed as a CDMA transceiver, and a controller **28** that is configured to transmit spectral performance data to a plurality of adjacent nodes and receive spectral performance data from the plurality of adjacent nodes. The controller **28** may be provided by one or more processors and associated memories.

Adjacent mobile wireless communications nodes **22** may be discovered such that the spectral performance data can be transmitted and received using a dynamic multi-channel power management system for discovering neighboring nodes, such as disclosed in U.S. Patent No. 10,652,806. The system described in the '806 patent employs a probe signal and a traffic channel transmitting user data with the probe signal to locate new nodes to add to the network and modify power in a probe signal such that the neighboring nodes may be identified.

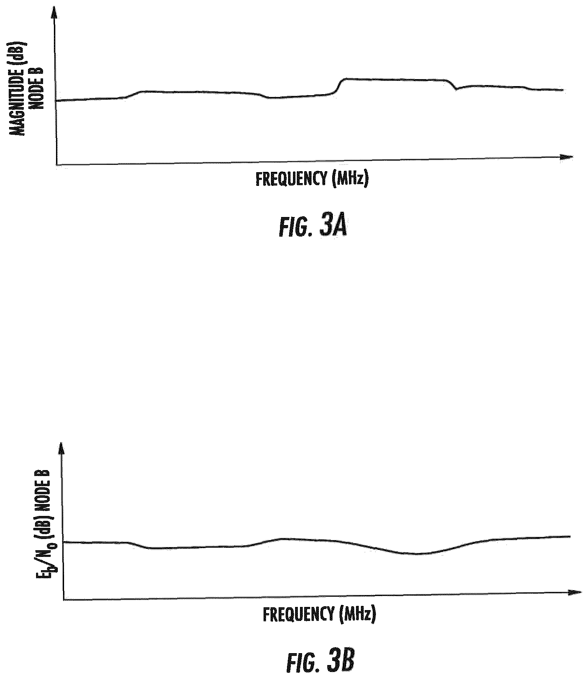

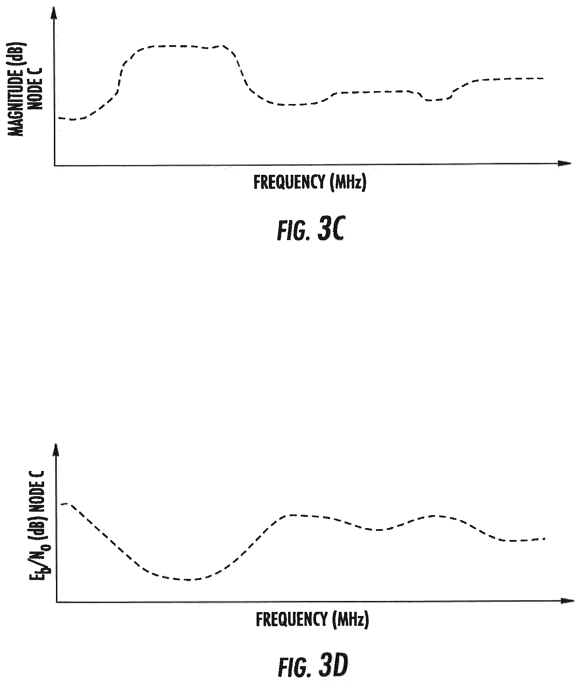

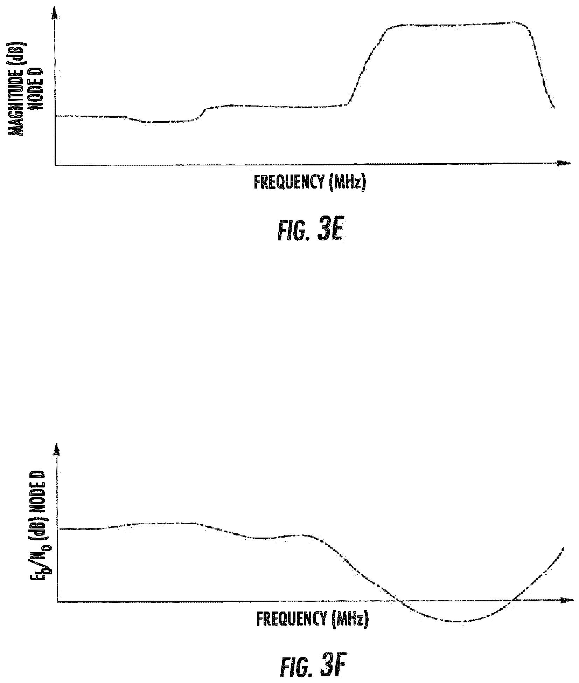

Reference is now made to the graphs of FIGS. 3A, 3C and 3E that illustrate examples of the magnitude in decibels versus frequency for the spectral performance data of the three mobile communications nodes labeled node B, node C, and node D in FIGS. 1 and 2 as received by node A. For example, FIG. 3A illustrates the graph of the magnitude of the received signal in decibels versus frequency received by node A from node B for the spectral performance data. This received signal strength across the frequency band for node B is used by node A to predict the energy per bit to noise power spectral density ratio (E_{b}/N₀ versus the frequency across the band. The E_{b}/N₀ is a normalized signal-to-noise (SNR) ratio measure, also known as the SNR per bit. Similar estimations are made based on the magnitude of the received signal versus frequency for the spectral performance data for nodes C and D, shown in the graphs of respective FIGS. 3C and 3E, and the predicted E_{b}/N₀ versus frequency across the band is shown in the graphs of FIGS. 3D and 3F for respective nodes C and D.

In an example, the spectral environment can be reported as spectral performance data from each of nodes B, C and D to allow node A to establish a traffic connection by receiving a message that contains the spectral power measurements and a signal-to-total-power ratio estimate that is related to the post excision E_{b}/N₀. For example, the spectral power may be measured with a real-time Fast Fourier Transform (FFT) circuit and power averaged over an interval.

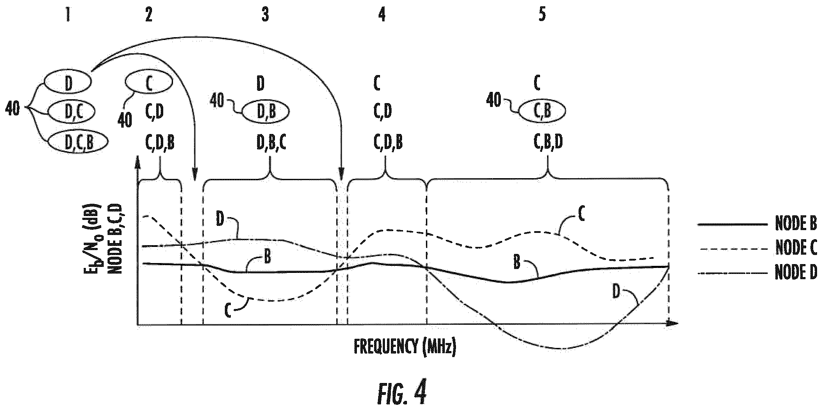

After the mobile communications node **22** corresponding to node A receives the spectral performance data from the plurality of adjacent nodes, in this example nodes B, C and D, a plurality of potential topologies are identified for these adjacent nodes based on the spectral performance data. An example of potential topologies is shown in the topologies that are identified in this simple three-node scenario for nodes B, C and D in the example of the graph in FIG. 4 that is determined by the superimposed graphs taken from FIGS. 3B, 3D and 3F, showing the overlap of the predicted E_{b}/N₀ versus frequency for each of the respective nodes B, C and D. The order of the nodes in terms of E_{b}/N₀ does not matter within a potential topology, although the order does determine which node would be selected for a potential topology that does not include all of the nodes. For example, if node B, C, and D had corresponding E_{b}/N₀ values in descending order, then the following sets of nodes would be candidate topologies: {B}, {B, C}, {B, C, D}. This convention exists due to the fact that if node A were to adjust its power and rate for a given node, then all of the nodes with higher corresponding E_{b}/N₀ would also be able to receive the signal. Note that the respective graph lines for each of nodes B, C, and D are labeled B, C, and D.

The crossing points of curves are shown by the vertical dashed lines and are indicative of a change in order of which graph line has the higher E_{b}/N₀. These crossing points are used to determine the regions of interest and are shown to identify the unique topologies, which are circled in this example and identified by the reference numeral **40.** These circled topologies **40** are a subset of potential topologies from among the plurality of potential topologies shown in FIG. 4. For example, the representative subset shown by the circled potential topologies **40** in FIG. 4 of potential topologies from among all the listed potential topologies include node A communicating with only node D, or node A communicating with nodes D and C, or node A communicating with nodes D, C and B as indicated by the three circled node groupings in the first column in the left hand side of the graph of FIG. 4 corresponding to three unique topologies as part of the subset. As shown in the second column of potential topologies, node A may communicate with node C alone as a fourth unique topology, and thus becomes part of the subset of potential topologies with nodes C and D, C and D, C, B. In the fifth potential topology of the subset shown in the third column, node A may communicate with node D and node B as the fifth unique topology in the subset. In the sixth potential topology in the subset shown in the fifth column, node A may communicate with nodes C and B.

It is possible to limit the number of topologies to evaluate. For example, generally the current topology may be evaluated, followed by likely topologies and then randomly selected topologies. A maximum of N topologies may be selected to evaluate each period, for example, such as N=10. The topologies selected for evaluation as the subset of potential topologies in a given period may be referred to as candidate topologies. Once the candidate topologies are selected, a respective performance score is generated for each of the candidate topologies. The performance score is based on at least one performance metric, which in non-limiting examples, may be at least one of fragmented nodes, number of connected nodes, and data rate.

Each of the potential topologies has a frequency where its worst-case predicted E_{b}/N₀ is maximized. A current topology may be evaluated at its best frequency, which can be changed using a system where the spectral information and relative power estimates are sent via messages, and E_{b}/N₀ feedback is sent via another message to arrive at an estimation. Likely topologies have a perfect score for at least one metric and some portion of the N candidate topologies may be allotted to likely topologies (e.g., 5). Topologies other than the current topology and likely topologies are selected at random to be candidate topologies to bring the total number of candidate topologies to N (e.g., 4 random topologies). If the total number of candidate topologies allocated to likely topologies exceeds the allotment (e.g., ≥5), then it is possible to rotate through the likely topologies in such a way that all of the likely topologies will be evaluated before revisiting a likely topology that was already evaluated. In like manner, if the total number of potential topologies that are not the current topology or likely topologies is greater than the number of candidate topologies allocated to randomly selected topologies (e.g., ≥4), then it is possible to rotate through the topologies that are randomly selected such that all of the topologies will be evaluated before duplication.

The candidate topologies that are not likely topologies or the current topology may be randomly selected in some examples. These topologies are taken from the potential topologies (e.g., highlighted topologies shown in FIG. 4) that are not identified as likely topologies or the current topology. Selecting random topologies permits the controller **28,** such as at node A, to help evaluate all topologies over time if necessary. In an example, the selection of random topologies may be from those potential topologies that have not yet been evaluated. With randomly selected topologies, the controller **28,** such as at node A, may keep track of the last time each topology was evaluated and prioritize less recent topologies, to guarantee that all topologies may be evaluated over time.

In an example where data rate is used as one of the metrics, a topology may be graded based on the maximum achievable data rate associated with an evaluated topology. For example, if the maximum achievable rate is less than or equal to 250 kbps, then the score is 0.1. If the maximum achievable rate is between 250 kbps and 1 Mbps, then the score is 0.5. Otherwise the score is 1.

In an example where the number of connected nodes is used as one of the metrics, a topology may be graded based on the number of nodes to which the local node connects. For example, if the number of connected nodes is 1, then the score is 0.25. If the number of connected nodes is 2, then the score is 0.5. If the number of connected nodes is 3, then the score is 0.75. If the number of connected nodes is 4 or more, then the score is 1.

In an example of the fragmented nodes as one of the metrics, a topology may be graded based on the number of fragmented nodes that result from a lack of connections associated with an evaluated topology. For example, as a baseline, a topology with all potential neighboring mobile communications nodes **22** may receive full points. A fragmented node may be defined as a node that it is no longer connected to the local node's network as a result of the local node not selecting a topology that includes all potential neighboring nodes. That node **22** is in a network fragment. This definition may extend to the known neighboring mobile communications nodes **22,** if any, of the fragmented node. For example, if there are two known neighbors of the fragmented node, then three nodes may be fragmented as a result of the local node not making a connection.

As a non-limiting example of the scoring function, "n" may be the number of fragmented mobile communications nodes **22** for a given topology decision. The scoring function may be somewhat arbitrary. An example of a scoring function may be the case where the result is 1 when n=0, and the result is 0 when n is greater than 0.

Once a respective performance score is generated for each potential topology of that subset of potential topologies, the communications system **20** switches to a new topology from among that subset of potential topologies based on the performance scores. In an example, the switch to the new topology may be further based upon whether the performance score of the new topology exceeds the performance score of the current topology by a hysteresis value, such as a percentage of the derivation, which could be 5% in a non-limiting example. After a topology change, there may be some settling time to allow the wireless communications connections to form among the mobile communications nodes **22,** which in the example of FIGS. 1 and 2 are nodes A, B, C and D. A local mobile communications node **22** may still react to sudden changes in interference during the settling time.

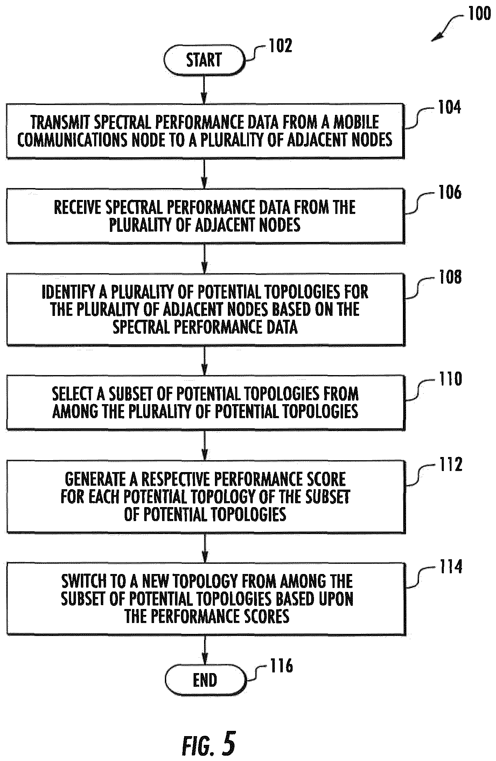

Referring now to FIG. 5, a high-level flowchart is illustrated at **100** and shows a method for operating a mobile communications node **22** within the communication system **20** that includes a plurality of mobile communication nodes operating according to a current topology and reconfigurable to a new topology. The process starts (Block **102)** and the controller **28** of a mobile communications node **22** transmits spectral performance data from the mobile communications node to a plurality of adjacent nodes (Block **104).** The spectral performance data is received from the plurality of adjacent mobile communications nodes **22** (Block **106)** and a plurality of potential topologies are identified for the plurality of adjacent nodes based on the spectral performance data (Block **108).** A subset of potential topologies is selected from among the plurality of potential topologies (Block **110)** and a respective performance score generated for each potential topology of the subset of potential topologies (Block **112).** The controller **28** switches to a new topology from among the subset of potential topologies based upon the performance scores (Block **114).** The process ends (Block **116).**

## Claims

1. A communications system (20) comprising:
a plurality of mobile communications nodes (22) operating according to a current topology and reconfigurable to a new topology, each mobile communications node comprising a wireless transceiver (26), and
a controller (28) coupled to the wireless transceiver and configured to
transmit (104) spectral performance data to a plurality of adjacent nodes,
receive (106) spectral performance data from the plurality of adjacent nodes,
identify (108) a plurality of potential topologies for the plurality of adjacent nodes based on the spectral performance data received therefrom,
select (110) a subset of potential topologies from among the plurality of potential topologies,
generate (112) a respective performance score for each potential topology of the subset of potential topologies, and
switch (114) to a new topology from among the subset of potential topologies based upon the performance scores,
wherein the communications system (20) is **characterized in that**
the subset of potential topologies, which is selected by the controller, comprises a plurality of random topologies, and
the subset of potential topologies, which is selected by the controller, comprises topologies having the highest score for at least one metric.

2. The communications system (20) of claim 1 wherein the controller (28) is configured to switch to the new topology further based upon whether the performance score of the new topology exceeds the performance score of the current topology by a hysteresis value.

3. The communications system (20) of claim 1 wherein the spectral performance data comprises energy per bit to noise power spectral density ratio (E_{b}/N₀.

4. A method (100) for operating a mobile communications node (22) within a communications system (20) comprising a plurality of mobile communications nodes operating according to a current topology and reconfigurable to a new topology, the method comprising:
operating a controller (28) of the mobile communications node to
transmit (104) spectral performance data to a plurality of adjacent nodes,
receive (106) spectral performance data from the plurality of adjacent nodes,
identify (108) a plurality of potential topologies for the plurality of adjacent nodes based on the spectral performance data received therefrom,
select (110) a subset of potential topologies from among the plurality of potential topologies,
generate (112) a respective performance score for each potential topology of the subset of potential topologies, and
switch (114) to a new topology from among the subset of potential topologies based upon the performance scores,
wherein the method is **characterized in that**
the subset of potential topologies comprises a plurality of random topologies, and
the subset of potential topologies comprises topologies having the highest score for at least one metric.

5. The method (100) of claim 4 wherein operating the controller (28) to switch to the new topology is further based upon whether the performance score of the new topology exceeds the performance score of the current topology by a hysteresis value.

6. The method (100) of claim 4 wherein the spectral performance data comprises energy per bit to noise power spectral density ratio (E_{b}/N₀.

## Patentansprüche

1. Ein Kommunikationssystem (20), umfassend:
eine Vielzahl von mobilen Kommunikationsknoten (22), die gemäß einer aktuellen Topologie arbeiten und auf eine neue Topologie umkonfigurierbar sind, wobei jeder mobile Kommunikationsknoten einen drahtlosen Sende-Empfänger (26) umfasst, und
eine Steuerung (28), die mit dem drahtlosen Sende-Empfänger gekoppelt und so konfiguriert ist, zum
Senden (104) von Spektralleistungsdaten an eine Vielzahl benachbarter Knoten,
Empfangen (106) von Spektralleistungsdaten von der Vielzahl benachbarter Knoten,
Identifizieren (110) von einer Vielzahl potenzieller Topologien für die Vielzahl benachbarter Knoten auf der Grundlage der von diesen empfangenen Spektralleistungsdaten,
Auswählen (110) einer Teilmenge potenzieller Topologien aus der Vielzahl potenzieller Topologien,
Erzeugen (112) einer entsprechenden Leistungsbewertung für jede mögliche Topologie der Teilmenge möglicher Topologien und
Wechseln (114) zu einer neuen Topologie aus der Teilmenge der möglichen Topologien auf der Grundlage der Leistungsbewertungen,
wobei das Kommunikationssystem (20) **dadurch gekennzeichnet ist, dass**
die von der Steuerung ausgewählte Teilmenge potenzieller Topologien eine Vielzahl von zufälligen Topologien umfasst, und
die von der Steuerung ausgewählte Teilmenge potenzieller Topologien solche Topologien umfasst, die für mindestens eine Metrik die höchste Bewertung aufweisen.

2. Das Kommunikationssystem (20) nach Anspruch 1, wobei die Steuerung (28) so konfiguriert ist, dass sie ferner auf der Grundlage dessen, ob die Leistungsbewertung der neuen Topologie die Leistungsbewertung der aktuellen Topologie um einen Hysterese-Wert übersteigt, auf die neue Topologie umschaltet.

3. Das Kommunikationssystem (20) nach Anspruch 1, wobei die Spektralleistungsdaten das Verhältnis von Energie pro Bit zur spektralen Rauschleistungsdichte (E_{b}/N₀) umfassen.

4. Ein Verfahren (100) zum Betreiben eines Mobilfunkknotens (22) innerhalb eines Kommunikationssystems (20), das eine Vielzahl von mobiler Kommunikationsknoten umfasst, die gemäß einer aktuellen Topologie arbeiten und auf eine neue Topologie umkonfigurierbar sind, wobei das Verfahren umfasst:
Betreiben einer Steuerung (28) des mobilen Kommunikationsknotens, zum
Senden (104) von Spektralleistungsdaten an eine Vielzahl benachbarter Knoten,
Empfangen (106) von Spektralleistungsdaten von der Vielzahl benachbarter Knoten,
Identifizieren (108) einer Vielzahl potenzieller Topologien für die Vielzahl benachbarter Knoten auf der Grundlage der von diesen empfangenen Spektralleistungsdaten,
Auswählen (110) einer Teilmenge potenzieller Topologien aus der Vielzahl potenzieller Topologien,
Erzeugen (112) einer jeweiligen Leistungsbewertung für jede mögliche Topologie der Teilmenge möglicher Topologien und
Wechseln (114) zu einer neuen Topologie aus der Teilmenge der möglichen Topologien auf der Grundlage der Leistungsbewertungen,
wobei das Verfahren **dadurch gekennzeichnet ist, dass**
die Teilmenge potenzieller Topologien eine Vielzahl von zufälligen Topologien umfasst, und
die Teilmenge potenzieller Topologien solche Topologien umfasst, die für mindestens eine Metrik die höchste Bewertung aufweisen.

5. Das Verfahren (100) nach Anspruch 4, wobei das Betreiben der Steuerung (28) zum Umschalten auf die neue Topologie ferner davon abhängt, ob die Leistungsbewertung der neuen Topologie die Leistungsbewertung der aktuellen Topologie um einen Hysterese-Wert übersteigt.

6. Das Verfahren (100) nach Anspruch 4, wobei die spektralen Leistungsdaten das Verhältnis von Energie pro Bit zur spektralen Rauschleistungsdichte (E_{b}/N₀) umfassen.

## Revendications

1. Un système de communication (20) comprenant:
une pluralité de nœuds de communication mobiles (22) fonctionnant selon une topologie actuelle et reconfigurables selon une nouvelle topologie, chaque nœud de communication mobile comprenant un émetteur-récepteur sans fil (26), et
un contrôleur (28) couplé à l'émetteur-récepteur sans fil et configuré pour
transmettre (104) des données de performance spectrale à une pluralité de nœuds adjacents,
recevoir (106) des données de performances spectrales provenant de la pluralité de nœuds adjacents,
identifier (108) une pluralité de topologies potentielles pour la pluralité de nœuds adjacents sur la base des données de performances spectrales reçues de ceux-ci,
sélectionner (110) un sous-ensemble de topologies potentielles parmi la pluralité de topologies potentielles,
générer (112) un score de performance respectif pour chaque topologie potentielle du sous-ensemble de topologies potentielles, et
basculer (114) vers une nouvelle topologie choisie parmi le sous-ensemble de topologies potentielles en fonction des scores de performance, le système de communication (20) étant **caractérisé en ce que**
le sous-ensemble de topologies potentielles, qui est sélectionné par le contrôleur, comprend une pluralité de topologies aléatoires, et
le sous-ensemble de topologies potentielles, qui est sélectionné par le contrôleur, comprend des topologies présentant le score le plus élevé pour au moins un indicateur.

2. Le système de communication (20) selon la revendication 1, dans lequel le contrôleur (28) est configuré pour basculer vers la nouvelle topologie en fonction également du fait que le score de performance de la nouvelle topologie dépasse ou non le score de performance de la topologie actuelle d'une valeur d'hystérésis.

3. Le système de communication (20) selon la revendication 1, dans lequel les données de performance spectrale comprennent le rapport entre l'énergie par bit et la densité spectrale de puissance du bruit (E_{b}/N₀).

4. Une méthode (100) pour faire fonctionner un nœud de communication mobile (22) au sein d'un système de communication (20) comprenant une pluralité de nœuds de communication mobiles , fonctionnant selon une topologie actuelle et reconfigurables selon une nouvelle topologie, la méthode comprenant:
faire fonctionner un contrôleur (28) du nœud de communication mobile pour
transmettre (104) des données de performances spectrales à une pluralité de nœuds adjacents,
recevoir (106) des données de performances spectrales provenant de la pluralité de nœuds adjacents,
identifier (108) une pluralité de topologies potentielles pour la pluralité de nœuds adjacents sur la base des données de performances spectrales reçues de ceux-ci,
sélectionner (110) un sous-ensemble de topologies potentielles parmi la pluralité de topologies potentielles,
générer (112) un score de performance respectif pour chaque topologie potentielle du sous-ensemble de topologies potentielles, et
basculer (114) vers une nouvelle topologie choisie parmi le sous-ensemble de topologies potentielles en fonction des scores de performance,
le procédé étant **caractérisé en ce que**
le sous-ensemble de topologies potentielles comprend une pluralité de topologies aléatoires, et
le sous-ensemble de topologies potentielles comprend des topologies présentant le score le plus élevé pour au moins un indicateur.

5. La méthode (100) selon la revendication 4, dans laquelle le fait de faire fonctionner le contrôleur (28) pour basculer vers la nouvelle topologie est en outre basé sur le fait que le score de performance de la nouvelle topologie dépasse ou non le score de performance de la topologie actuelle d'une valeur d'hystérésis.

6. La méthode (100) selon la revendication 4, dans laquelle les données de performances spectrales comprennent le rapport entre l'énergie par bit et la densité spectrale de puissance du bruit (E_{b}/N₀).
